# DEMANDE DE BREVET EUROPEEN

(11) **EP 1 085 629 A1**
(43) Date de publication de la demande: **21.03.2001**
(21) Numéro de dépôt: 00420184.4
(22) Date de dépôt: 30.08.2000
(51) Int. Cl.: H02B 1/052

(54) **Pied de fixation sur un rail support**

(30) Priorité: 16.09.1999 FR 9911800
(71) Demandeur: Entrelec SA, 69002 Lyon (FR)
(72) Inventeur: Bechaz, Bernard, 69300 Caluire (FR); Barrat, Sylvain, 69220 Belleville sur Saone (FR)
(74) Mandataire: Maureau, Philippe

(57) **Abrégé**

Ce pied de fixation comporte deux pièces coulissantes (6) l'une par rapport à l'autre, chaque pièce présentant un crochet (12) destiné à permettre le verrouillage sur le rail support.

Une première pièce coulissante (6) présente des moyens d'encliquetage (20) et la seconde pièce coulissante (6) comporte des moyens d'encliquetage complémentaire (16, 18) de manière à ce que ces moyens d'encliquetage coopèrent lorsque les pièces coulissantes (6) sont en position déverrouillée et éventuellement en position verrouillée.

## Description

La présente invention concerne un pied de fixation sur un rail support.

Un tel pied de fixation est utilisé pour le montage sur un rail support d'un dispositif de connexion électrique tel par exemple un bloc de jonction ou un porte fusible. Lorsque le dispositif à monter est de relativement petite taille, la fixation sur le rail support se fait par exemple par encliquetage. Une telle fixation convient car la force nécessaire pour réaliser cette fixation est relativement faible. Pour des dispositifs électriques de tailles plus importantes, on utilise un système de verrouillage manoeuvrable appelé également pied de fixation.

Les rails supports utilisés sont des rails profilés présentant une section transversale en forme de U. L'extrémité libre des branches du U est repliée sensiblement à angle droit vers l'extérieur et forme ainsi deux ailes latérales. Les pieds de fixation connus comportent généralement deux crochets, dont l'un au moins est mobile, destinés chacun à venir saisir par le dessous une aile latérale.

Les documents EP-0 326 624 et DE-41 08 072 révèlent par exemple un tel pied de fixation.

Un inconvénient de ces pieds de fixation est qu'ils sont toujours précontraints en position de verrouillage. Ceci ne facilite pas leur montage sur le rail support. On a également avec ces pieds de fixation un problème d'accès. En effet, il est parfois difficile dans une armoire électrique d'accéder au pied de fixation pour réaliser un verrouillage ou un déverrouillage sur le rail support.

La présente invention a pour but de fournir un pied de fixation permettant un verrouillage et un déverrouillage sur un rail support plus aisé que pour les pieds de fixation de l'art antérieur.

A cet effet, le pied de fixation qu'elle propose est un pied de fixation sur un rail support d'un boîtier électrique, comportant deux pièces coulissantes l'une par rapport à l'autre, chaque pièce présentant un crochet destiné à permettre le verrouillage sur le rail support.

Selon l'invention, une première pièce coulissante présente des moyens d'encliquetage et la seconde pièce coulissante comporte des moyens d'encliquetage complémentaires de manière à ce que ces moyens d'encliquetage coopèrent lorsque les pièces coulissantes sont en position déverrouillée et éventuellement aussi en position verrouillée.

De cette manière, il est possible de maintenir le pied de fixation en position déverrouillée sans intervention extérieure. Ainsi, pour mettre le boîtier en position sur le rail support, il suffit de le présenter face au rail, sans se soucier du pied de fixation. De même, pour retirer le boîtier du rail support, il suffit de déverrouiller le pied de fixation et l'enlever. Pendant ces opérations, il n'est nullement nécessaire d'agir sur le pied de fixation. De ce fait, on peut plus facilement accéder au rail support, même lorsque l'espace autour de celui-ci est encombré.

Le maintien en position verrouillée par encliquetage est optionnel car on peut prévoir pour le maintien dans cette position un ressort ou bien d'autres moyens élastiques.

La première pièce coulissante d'un pied de fixation selon l'invention comporte par exemple un second crochet monté élastiquement dans une direction sensiblement perpendiculaire à la direction de déplacement des pièces coulissantes et la seconde pièce coulissante comporte alors par exemple deux rainures destinées à recevoir l'extrémité du second crochet. Le crochet vient dans une rainure lorsque le pied est en position déverrouillée tandis qu'il vient dans la seconde rainure en position verrouillée.

Dans cette forme de réalisation, le second crochet peut être disposé à l'extrémité d'une patte élastique découpée dans la pièce coulissante.

Dans un pied de fixation selon l'invention, on peut prévoir que les deux pièces coulissantes se chevauchent, qu'une pièce coulissante comporte à l'une de ses extrémités un logement destiné à recevoir la lame d'un tournevis et qu'une extrémité de l'autre pièce coulissante présente à la hauteur du logement un rebord surélevé destiné à servir d'appui pour le tournevis. Dans cette forme de réalisation, en une seule manoeuvre, on vient agir à la fois sur les deux pièces coulissantes. On agit donc d'un seul geste sur les deux côtés du rail support.

Pour créer une force de rappel dans la position verrouillée, on peut prévoir sur chaque pièce coulissante une lame élastique s'étendant perpendiculairement à la direction de déplacement des pièces coulissantes vers l'intérieur du boîtier électrique et destinée à venir en appui contre une paroi intérieure de ce boîtier de manière à précontraindre chaque pièce coulissante vers la position de verrouillage.

Avantageusement, les deux pièces coulissantes sont identiques et se présentent chacune sous la forme de deux plaques allongées disposées l'une dans le prolongement de l'autre avec un décalage en hauteur, une encoche latérale permettant l'emboîtement des deux pièces coulissantes étant prévue sensiblement au milieu de chaque pièce coulissante. Ceci permet de diminuer très sensiblement le prix de revient d'un pied de fixation car d'une part un seul type de pièce est à réaliser et d'autre part montage du pied de fixation est facile à réaliser.

Dans cette forme de réalisation, un bord de l'encoche est avantageusement biseauté, de telle sorte qu'à l'état monté du pied, les deux bords biseautés se font face. On peut alors venir avec un tournevis au niveau de ces bords biseautés pour venir agir sur les pièces coulissantes. Lorsque le boîtier est monté sur le rail support, il est possible de venir déverrouiller le pied de fixation par le centre et non pas par les bords comme c'est le cas pour les pieds de fixation de l'art antérieur.

La présente invention concerne également un dispositif de connexion électrique qui comporte un pied de fixation tel que décrit ci-dessus. Un tel dispositif de connexion électrique comporte de préférence un boîtier dans lequel est réalisé un trou central sensiblement perpendiculaire à la direction de déplacement des pièces coulissantes du pied de fixation, ce trou permettant d'accéder par le haut du boîtier au pied de fixation.

De toute façon, l'invention sera bien comprise à l'aide de la description qui suit en référence au dessin schématique annexé représentant à titre d'exemples non limitatifs deux formes de réalisation d'un pied bistable selon l'invention.
Figure 1 est une vue en perspective partiellement coupée d'une pièce constitutive d'un pied selon l'invention,
Figure 2 est une vue en perspective, partiellement coupée également montrant deux pièces de la figure 1 emboîtées l'une dans l'autre,
Figures 3 à 5 montrent en vue de côté, à échelle réduite, le pied de la figure 2 monté dans un bloc de jonction,
Figure 6 est une vue en perspective d'une pièce constitutive d'un pied bistable selon une variante de réalisation, et
Figures 7 à 9 sont des vues de côté correspondant aux figures 3 à 5 pour ce second mode de réalisation d'un pied bistable selon l'invention.

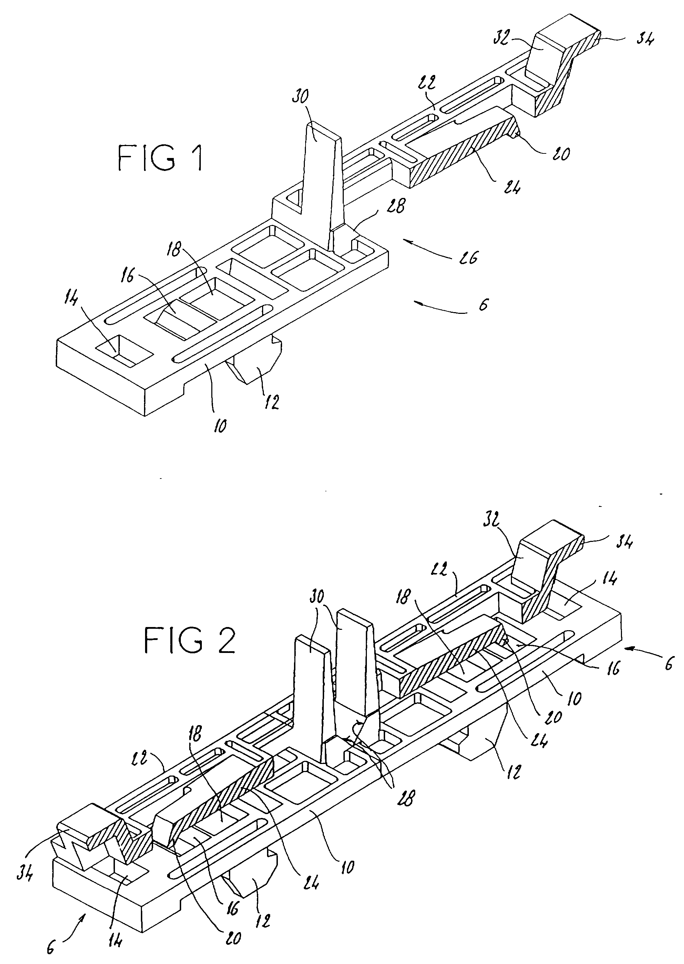

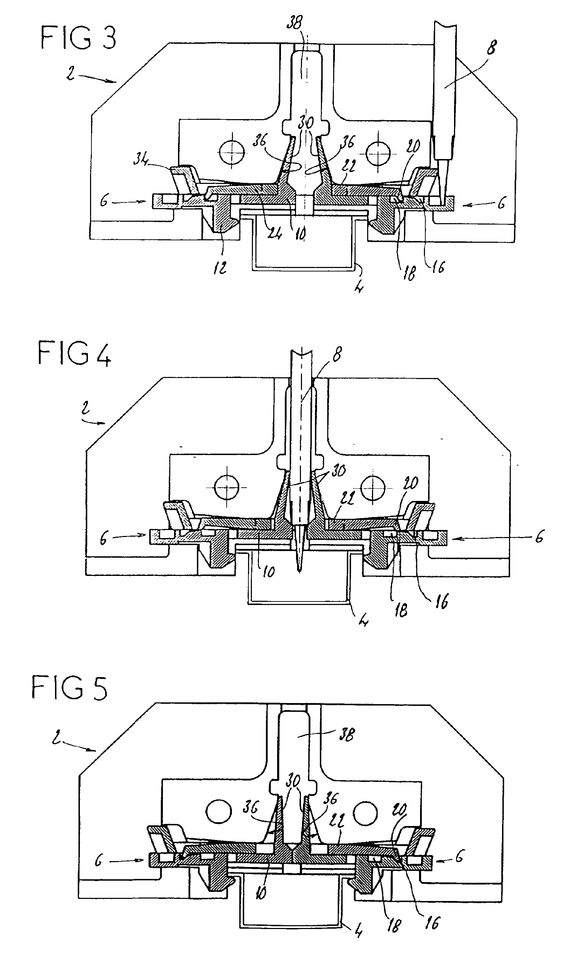

La figure 3 montre un boîtier 2 d'un dispositif de connexion électrique, par exemple un bloc de jonction, posé sur un rail support 4. Ce bloc de jonction comporte un pied de fixation constitué de deux pièces coulissantes 6 telles celles que l'on peut apercevoir en perspective et partiellement coupées sur la figure 1. Ce pied de fixation permet le verrouillage et le déverrouillage du boîtier 2 sur le rail support 4. Il est actionné par l'extrémité d'un tournevis 8.

Le rail support 4 est un rail support classique tel qu'il est connu de l'homme du métier. Il s'agit d'un rail profilé de section en U, des extrémités libres des branches du U étant repliées vers l'extérieur. La section transversale de ce profilé rappelle la forme d'un chapeau.

La figure 1 montre dans le détail une pièce coulissante 6 en perspective. Cette pièce coulissante comporte deux plaques allongées disposées l'une à la suite de l'autre dans le sens longitudinal mais avec un décalage en hauteur correspondant sensiblement à l'épaisseur d'une plaque allongée.

Une première plaque allongée 10 est de contour extérieur sensiblement rectangulaire. Elle porte sur sa face inférieure un crochet 12. Ce dernier est destiné à venir se placer sous un bord replié du rail support 4 de telle sorte que ce bord replié soit pris en sandwich entre le crochet 12 et la première plaque allongée 10.

La face supérieure, opposée au crochet 12, de la première plaque allongée 10 présente, à proximité de son extrémité libre un logement 14 destiné à recevoir l'extrémité de la lame du tournevis 8. Cette face supérieure comporte également deux rainures transversales 16 et 18 destinées à coopérer avec un crochet élastique 20 décrit ultérieurement. Les rainures 16 et 18 s'étendent transversalement par rapport à la plaque 10. On constate d'autres évidements dans la première plaque allongée 10. Ces évidements sont réalisés pour réaliser une économie de matière. Cette pièce coulissante 6 est réalisée par moulage en matière synthétique et pour réduire le coût de réalisation de cette pièce des évidements sont prévus. On peut se permettre de tels évidements car les pièces coulissantes ne subissent pas de contraintes mécaniques élevées.

La seconde plaque allongée 22 s'étend dans la même direction que la première plaque allongée 10 et elle prolonge cette dernière avec toutefois un décalage en hauteur. Cette seconde plaque allongée 22 est décalée vers le haut par rapport à la première plaque 10.

Dans cette seconde plaque allongée 22 est réalisée le crochet élastique 20. Ce crochet élastique est obtenu par une découpe de la seconde plaque allongée 22. On réalise ainsi une patte 24 allongée dans le sens longitudinal dont l'extrémité libre est recourbée vers le bas de manière à former un crochet.

Du côté de la première plaque allongée 10, la seconde plaque allongée 22 présente une encoche 26 débouchant latéralement et qui pénètre à l'intérieur de la plaque 22 sur plus de la moitié de la largeur de cette dernière. Le bord de cette encoche, se trouvant du côté de la première plaque allongée 10, est biseauté sur la face supérieure de la seconde plaque allongée 22. Au niveau de ce bord biseauté 28 s'étend vers le haut une lame élastique 30.

L'extrémité libre de la seconde plaque allongée 22 présente un bossage 32 de manière à présenter un rebord surélevé 34.

On aperçoit sur la seconde plaque allongée 22 des évidements. De même que les évidements de la première plaque allongée 10, ces évidements sont réalisés pour faire une économie de matière lors du moulage de la pièce coulissante 6.

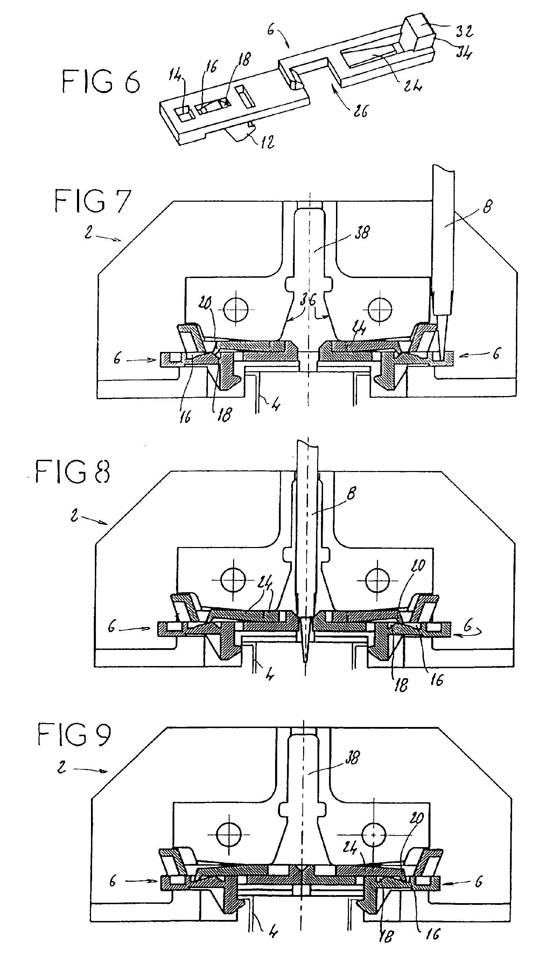

Pour réaliser un pied de fixation, on utilise deux pièces coulissantes que l'on emboîte l'une dans l'autre de manière à placer la première plaque allongée 10 d'une pièce coulissante 6 sous la seconde plaque allongée 22 de l'autre pièce coulissante 6. Un tel ensemble est représenté en perspective sur la figure 2. Afin de mieux voir les différentes parties du pied de fixation ainsi représentées, une zone de chaque pièce coulissante a été retirée. La zone retirée est identique à la zone restante. Les deux pièces 6 ainsi montées peuvent coulisser longitudinalement. La course du déplacement est donnée par la largeur de l'encoche 26. Dans la position verrouillée, les deux bords biseautés 28 se trouvent l'un contre l'autre (figures 2 et 5) tandis qu'en position déverrouillée les secondes plaques allongées 22 viennent buter contre les bords opposés aux bords biseautés 28 des encoches 26 (figure 3).

Les rainures d'encliquetage 16 et 18 transversales sont placées de telle sorte sur les premières plaques 10 que le crochet élastique 20 de l'autre pièce coulissante 6 se trouve dans la rainure transversale 16 dans la position verrouillée et dans la rainure transversale 18 dans la position déverrouillée.

Les figures 3 à 5 montrent le pied de fixation décrit ci-dessus monté dans le boîtier 2 d'un bloc de jonction.

La figure 3 montre le pied de verrouillage en position déverrouillée. Les crochets 12 des pièces coulissantes 6 sont donc écartés l'un de l'autre. Les crochets élastiques 20 se trouvent chacun dans une rainure d'encliquetage 18. Cette position est une position stable même si les lames élastiques 30 exercent sur le reste de chaque pièce coulissante 6 une contrainte tendant à faire passer le pied de fixation de la position déverrouillée à la position verrouillée.

Pour que les lames élastiques 30 exercent une contrainte sur les pièces coulissantes 6, des butées 36 sont prévues dans le boîtier 2. Ces butées 36 se présentent sous la forme d'un plan incliné. Au repos, les lames élastiques 30 s'étendent sensiblement verticalement. Cette position de repos correspond à la position verrouillée représentée figure 5. Les extrémités libres supérieures des lames élastiques 30 sont alors au contact de la partie supérieure des butées 36. Lorsque le pied de fixation passe dans la position déverrouillée, les lames élastiques s'éloignent l'une de l'autre. Grâce aux butées 36, l'extrémité libre des lames élastiques 30 ne se déplace pas tandis que la base de ces lames élastiques se déplace avec le reste de la pièce coulissante 6. En position déverrouillée (figure 3), chaque lame élastique 30 épouse sensiblement la surface inclinée correspondante formant butée 36.

Comme indiqué déjà précédemment, la position déverrouillée est une position stable car chaque crochet élastique 20 est en prise dans la rainure d'encliquetage 16 correspondante. Il est inutile de maintenir le tournevis 8 dans la position représentée sur la figure 3 pour conserver le pied de fixation en position déverrouillée. Pour passer de la position déverrouillée à la position verrouillée, il suffit de venir pousser sur une extrémité d'une pièce coulissante 6 vers le rail support 4 de manière à désencliqueter le crochet élastique 20 hors de la rainure d'encliquetage 16 correspondante. Les lames élastiques 30 ramènent alors les pièces coulissantes dans la position verrouillée. Les crochets élastiques 20 viennent alors en prise dans les rainures d'encliquetage 18 comme montré sur la figure 5. Cette position verrouillée est également une position stable.

Pour passer de la position verrouillée à la position déverrouillée, il faut venir écarter les crochets 12. On peut alors par exemple venir avec l'extrémité de la lame du tournevis 8 dans un des deux logements 14 et, en prenant appui sur le rebord surélevé 34 de l'autre pièce coulissante on vient tirer une pièce coulissante 6 et pousser l'autre. Les crochets élastiques 20 sortent alors des rainures transversales 18 correspondantes pour venir se placer dans les encoches d'encliquetage 16. On se retrouve alors dans la position représentée sur la figure 3.

Une autre solution consiste à faire passer le tournevis par une cheminée 38 réalisée à cet effet dans le boîtier 2. Cette cheminée s'étend au droit des bords biseautés 28. Ces bords biseautés permettent alors l'introduction de l'extrémité de la lame du tournevis 8 entre les deux pièces coulissantes 6 comme représenté sur la figure 4. Les pièces coulissantes 6 sont alors dans une position intermédiaire. Les crochets élastiques 20 se trouvent entre les rainures d'encliquetage 16 et les rainures d'encliquetage 18. Il suffit alors de tourner le tournevis 8 sur lui-même, d'au moins 90°, pour ramener les pièces coulissantes dans la position déverrouillée représentée sur la figure 3.

Comme on peut le voir, ce pied de fixation présente de nombreux avantages. Il peut être actionné latéralement ou à partir du centre. Ainsi, lorsque le boîtier 2 est monté sur le rail support 4 et que des connexions sont réalisées, il est parfois difficile d'accéder entre les fils connectés aux bords du boîtier 2. Avec le nouveau pied de fixation selon l'invention décrit ci-dessus, on peut alors déverrouiller le boîtier du rail support par le centre. On peut également remarquer que l'on accède aussi bien d'un côté que de l'autre au pied de fixation. De plus, une seule manoeuvre suffit à déplacer les deux crochets 12. On libère ainsi en une seule opération le boîtier 2 du rail 4. Ce pied de fixation présente aussi comme avantage, et ce n'est pas le moindre, d'être stable aussi bien en position verrouillée qu'en position déverrouillée. Ceci permet un très grand confort d'utilisation pour l'opérateur amené à réaliser le montage et le démontage du boîtier sur le rail support.

Ce pied de fixation est également facilement réalisable. Comme indiqué plus haut, il est constitué de deux pièces en matière synthétique moulée. De plus, ces deux pièces sont rigoureusement identiques. Un seul moule est donc suffisant et l'opération de montage est très simplifiée.

Les figures 6 à 9 montrent une variante de réalisation d'un pied de fixation selon l'invention. Les mêmes références sont utilisées ici pour désigner des pièces similaires.

La différence essentielle entre le pied bistable des figures 1 à 5 et le pied bistable des figures 6 à 9 est l'absence de lame élastique dans la seconde forme de réalisation. A par cette différence, on retrouve une structure semblable. On retrouve deux pièces coulissantes 6 identiques. Chacune de ces pièces coulissantes comporte une première plaque allongée 10 munie d'un logement 14 destiné à recevoir l'extrémité libre d'un tournevis et deux rainures d'encliquetage 16 et 18 ainsi qu'une seconde plaque allongée 22 dans laquelle est réalisée une encoche 26 ainsi qu'une patte élastique 24 portant un crochet élastique 20. On retrouve également un bossage 32 et un rebord surélevé 34.

Le fonctionnement de ce pied bistable est sensiblement identique sauf que l'on n'a pas de force de rappel élastique vers la position verrouillée. L'effet de verrou est alors moins important. Toutefois, étant donné qu'en position verrouillée les deux pièces coulissantes sont encliquetées l'une par rapport à l'autre, on a tout de même un bon verrouillage.

Un avantage de cette forme de réalisation par rapport à la première forme de réalisation est le gain de place en hauteur. Cette seconde forme de réalisation peut être utilisée lorsque l'encombrement en hauteur est limité.

On retrouve pour cette seconde variante de réalisation les mêmes avantages que ceux décrits ci-dessus en référence à la première forme de réalisation.

Comme il va de soi, l'invention ne se limite pas aux deux formes de réalisation décrites ci-dessus à titre d'exemples non limitatifs ; elle en embrasse au contraire toutes les variantes dans le cadre des revendications ci-après.

Ainsi par exemple, on pourrait très bien avoir deux pièces coulissantes qui ne soient pas identiques. On pourrait très bien obtenir un fonctionnement similaire avec deux pièces différentes.

Il n'est pas nécessaire de prévoir forcément deux rainures d'encliquetage sur chaque pièce coulissante. En effet, on peut constater que la rainure d'encliquetage correspondant à la position verrouillée pourrait être supprimée lorsque le pied de fixation est précontraint en position verrouillée.

D'autres moyens que des lames élastiques peuvent être mis en oeuvre pour assurer une précontrainte vers la position verrouillée. On pourrait par exemple utiliser un ressort métallique, par exemple un ressort hélicoïdal, qui serait relié à l'une de ses extrémités à une pièce coulissante et à son autre extrémité à l'autre pièce coulissante. Même en utilisant des lames élastiques, celles-ci pourraient être placées différemment et même présenter une forme différente de celle montrée au dessin.

## Revendications

1. Pied de fixation sur un rail support (4) d'un boîtier (2) électrique, comportant deux pièces coulissantes (6) l'une par rapport à l'autre, chaque pièce (6) présentant un crochet (12) destiné à permettre le verrouillage sur le rail support (4),
caractérisé en ce que les deux pièces coulissantes (6) étant chacune distinctes du boîtier et montées chacune coulissantes sur le boîtier, une première pièce coulissante (6) présente des moyens d'encliquetage (20) et en ce que la seconde pièce coulissante (6) comporte des moyens d'encliquetage complémentaires (16,18) de manière à ce que ces moyens d'encliquetage coopèrent lorsque les pièces coulissantes (6) sont en position déverrouillée et éventuellement aussi en position verrouillée.

2. Pied de fixation sur un rail support selon la revendication 1, caractérisé en ce que la première pièce coulissante (6) comporte un second crochet (20) monté élastiquement dans une direction sensiblement perpendiculaire à la direction de déplacement des pièces coulissantes et en ce que la seconde pièce coulissante (6) comporte deux rainures (16,18) destinées à recevoir l'extrémité du second crochet (20).

3. Pied de fixation sur un rail support selon la revendication 2, caractérisé en ce que le second crochet (20) est disposé à l'extrémité d'une patte élastique (24) découpée dans la pièce coulissante (6).

4. Pied de fixation sur un rail support selon l'une des revendications 1 à 3, caractérisé en ce que les deux pièces coulissantes (6) se chevauchent, en ce qu'une pièce coulissante (6) comporte à l'une de ses extrémités un logement (14) destiné à recevoir la lame d'un tournevis (8) et en ce qu'une extrémité de l'autre pièce coulissante (6) présente à la hauteur du logement (14) un rebord (34) surélevé destiné à servir d'appui pour le tournevis (8).

5. Pied de fixation sur un rail support selon l'une des revendications 1 à 4, caractérisé en ce que chaque pièce coulissante (6) comporte une lame élastique (30) s'étendant perpendiculairement à la direction de déplacement des pièces coulissantes vers l'intérieur du boîtier (2) électrique et destinée à venir en appui contre une paroi intérieure (36) de ce boîtier de manière à précontraindre chaque pièce coulissante (6) vers la position de verrouillage.

6. Pied de fixation sur un rail support selon l'une des revendications 1 à 5, caractérisé en ce que les deux pièces coulissantes (6) sont identiques et en ce qu'elles se présentent chacune sous la forme de deux plaques allongées (10,22) disposées l'une dans le prolongement de l'autre avec un décalage en hauteur, une encoche (26) latérale permettant l'emboîtement des deux pièces coulissantes (6) étant prévue sensiblement au milieu de chaque pièce coulissante (6).

7. Pied de fixation sur un rail support selon la revendication 6, caractérisé en ce qu'un bord de l'encoche est biseauté, de telle sorte qu'à l'état monté du pied, les deux bords biseautés (28) se font face.

8. Dispositif de connexion électrique, caractérisé en ce qu'il comporte un pied de fixation selon l'une des revendications 1 à 7.

9. Dispositif de connexion électrique selon la revendication 8, caractérisé en ce qu'il comporte un boîtier (2) dans lequel est réalisé un trou central (38) sensiblement perpendiculaire à la direction de déplacement des pièces coulissantes (6) du pied de fixation, ce trou permettant d'accéder par le haut du boîtier au pied de fixation.
